# EUROPEAN PATENT SPECIFICATION

(11) **EP 3 504 519 B1**
(45) Date of publication and mention of the grant of the patent: **15.06.2022**
(21) Application number: 17755280.9
(22) Date of filing: 03.08.2017
(51) Int. Cl.: G01F 11/24

(54) **DOSING UNIT FOR DOSING SINGULATED PARTICLES OR GRANULES TO A BLENDING RECIPE AND METHOD THEREFOR**
DOSIEREINHEIT ZUR DOSIERUNG VON VEREINZELTEN TEILCHEN ODER GRANULAT FÜR EIN MISCHREZEPT UND VERFAHREN DAFÜR
UNITÉ DE DOSAGE POUR DOSER DES PARTICULES OU DES GRANULÉS SÉPARÉS DANS UNE RECETTE DE MÉLANGE ET PROCÉDÉ ASSOCIÉ

(30) Priority: 24.08.2016 NL 2017359
(43) Date of publication of application: 03.07.2019
(73) Proprietor: Movacolor B.V., 8601 VB Sneek (NL)
(72) Inventor: AUKES, Jelte Jetse, 8731 EA Wommels (NL)
(74) Representative: Verdijck, Gerardus
(86) International application number: PCT/NL2017/050517
(87) International publication number: WO 2018/038601

(56) References cited:
- EP-A2- 0 140 701
- WO-A1-2013/049198
- WO-A2-2012/129442
- US-A1- 2007 266 917
- US-A1- 2014 261 118
- US-A1- 2016 135 362
- US-B1- 6 561 377

## Description

The present invention relates to dosing units that are configured for dosing singulated particles or granules to a blending recipe.

Conventional dosing units are capable of dosing an amount of solid particles or granules to a composition or recipe. US2007/0266917-A1 discloses a seed meter for agricultural seeding implements to achieve a right seeding rate/population in the field, using a sensor to detect empty seed cells of the seed metering disk. An empty cell indicates that there will be a skip in the field.

One of the problems with such conventional dosing units is the insufficient accuracy of the dosing process. Especially in recipes that require dosing a small amount of (singulated) particles the accuracy of such conventional dosing units is insufficient.

The object of the present invention is to obviate the aforementioned problems and to provide a dosing unit that is capable of dosing singulated particles or granules to a blending recipe sufficiently accurate.

This object is achieved with the dosing unit for dosing singulated particles or granules to a blending recipe according to claim 1.

A storage compartment in the housing of the dosing unit is capable of holding an amount of particles or granules. Providing a suction channel in the housing, and providing a rotatable transfer element between this suction channel and a storage compartment, enables dosing a singulated particle or granule. This is achieved by sucking an individual particle or granule into one of the openings or holes in the rotatable transfer element. By rotating the transfer element, the individual or singulated particles or granules are moved from the storage compartment towards the outlet of the dosing unit. This outlet provides the singulated particles or granules to the blending recipe. It is noted that the suction channel is also referred to as vacuum channel. In a presently preferred embodiment of the dosing unit according to the invention, the rotatable transfer element is embodied as a rotatable disc. It will be understood that other shapes or dimensions for the transfer element could also be envisaged.

Providing a singulator that is configured for singulating the particles or granules when transferred by one of the one or more openings of the transfer element, such that an additional particle or granule in or in front of the opening can be removed. This prevents dosing two particles or granules in stead of one particle or granule with a single opening. Therefore, this singulator prevents accidently double dosing or overdosing particles or granules into the recipe or composition. This improves the overall dossing accuracy of the dosing unit.

The dosing unit is provided with a sensor that is configured for proactively measuring the dosing of a singulated particle or granule. This enables a correction to be made in case an opening is not provided with a particle or granule. This prevents underdosing of the particles or granules. This is achieved by providing a measurement signal from this sensor to a controller that is capable of correcting the dosing, prior to the actual dosing of the particle or granule to the recipe. For example, the controller may activate the transfer element to rotate over an additional angle to dose a particle or granule that is present in a further opening of the transfer element. This enables a pro-active correction of the actual dosing. This also improves the overall dossing accuracy of the dosing unit.

The dosing unit according to the invention is provided with an inlet to enable supply of an amount of particles to the storage compartment of the dosing unit. Furthermore, the dosing unit is provided with an outlet that is configured for dosing singulated particles or granules to the desired blending recipe. The particles or granules preferably relate to solid particles that have an average size of diameter in the range of 1-4 mm, more preferably have an average size of diameter of about 2 mm.

In a presently preferred embodiment of the invention, the singulator comprises an actuator. By providing the singulator with an actuator/activator, it is possible to control the singulating process of the particles or granules. Also, the singulator can be adjusted as function of the size of the particles or granules that are being dosed. This improves the flexibility of the dosing unit according to a preferred embodiment of the invention.

According to the invention, the sensor comprises a transmitter configured for transmitting a signal through the opening of the transfer element, such that the presence of a particle or granule in or in front of the opening is detected prior to the actual dosing of the particle or granule to the blending recipe.

By providing a transmitter the sensor is capable of sending a signal through the opening to detect a particle or granule. The sensor preferably comprises a signal detector that sends a signal indicative of the presence of a particle or granule to the controller of the dosing unit. Providing a sensor with a transmitter and preferably a detector it is possible to detect the presence of a particle or granule in or in front of the opening. This enables a proactive measurement of the next dosing step. Preferably, the sensor is provided between the singulator and the outlet. Such position of the sensor enables proactive detection of the presence of a particle or granule in the next dosing step. In addition, it also enables the controller to take proactive corrective measures in case no particle or granule is detected and to enable a correct dosing. This further improves the overall accuracy of the dosing unit according to such preferred embodiment of the invention.

Preferably, the sensor signal that is provided by the sensor comprises a light beam signal. For example, this may relate to a laser or (near) infrared signal. It will be understood that other sensor signals can also be envisaged in accordance with the invention. For example, the use of acoustic or ultrasonic signals can also be envisaged.

In a further preferred embodiment according to the present invention, the dosing unit further comprises a dosing sensor configured for determining the actual dosing of the particle or granule.

Providing the dosing unit with a dosing sensor enables determining the actual dosing of a singulated particle or granule to the blending recipe. This provides the user or controller of such embodiment of the dosing unit with information about the actual composition of the dosed recipe. In one of the presently preferred embodiments, the dosing sensor is provided in or close to the outlet of the dosing unit. This enables the dosing sensor to perform a post-dosing measurement of the particle or granule that is actually dosed. This further improves the overall accuracy of the dosing unit.

In a presently preferred embodiment the dosing unit is provided with both the sensor, capable of proactive measurement of the presence of a particle or granule, and the dosing sensor, capable of post dosing sensing of the actual dosing of a particle or granule to the desired blending recipe. Such combination of sensors further improves the accuracy of the dosing unit and enables a reliable and robust dosing process.

In one of the preferred embodiments of the invention the suction channel that is provided in the housing of the dosing unit can be provided with a venturi. Such venturi is configured to provide an under-pressure or so-called vacuum in the suction channel. Alternatively, or in combination therewith, other means to achieve an under-pressure or vacuum can be applied in the dosing unit in accordance with alternative embodiments of the invention. For example, a so-called vacuum pump can be applied to achieve the desired under-pressure or so-called vacuum.

In a presently preferred embodiment, the transfer element moves the one or more openings relative to the suction channel with a speed of up to 25 openings per second, such that up to 25 particles or granules per second can be dosed to the blending recipe. This provides an acceptable capacity for the dosing unit in one of the presently preferred embodiments of the invention.

The invention further relates to a method for dosing singulated particles or granules to a blending recipe according to claim 8.

Such method provides the same effects and advantages as those mentioned in relation to the dosing unit. The method specifically enables an accurate dosing of particles or granules in accordance to a specific blending recipe. Especially, the proactive correction of the dosing in response to a measurement signal indicative for the absence of a particle or granule in or in front of an opening of the transfer element during the dosing process significantly improves the overall accuracy of the dosing process.

Alternatively, or preferably in combination therewith, in one of the embodiments of the invention the method further comprises the step of measuring the actual dosing of the particle or granule to the blending recipe. This post-dosing sensing of the actual dosing of a singulated particle or granule further improves the overall dosing process and enables further improving the accuracy of the dosing unit.

Further advantages, features and details of the invention are elucidated on basis of preferred embodiments thereof, wherein reference is made to the accompanying drawings, in which:
- figures 1 and 2 show the dosing unit according to the invention;
- figures 3 and 4 show side views of the dosing unit of figures 1 and 2;
- figure 5 shows the details of the dosing unit of figures 1-4;
- figures 6-8 show further details of the dosing unit of figures 1-4.

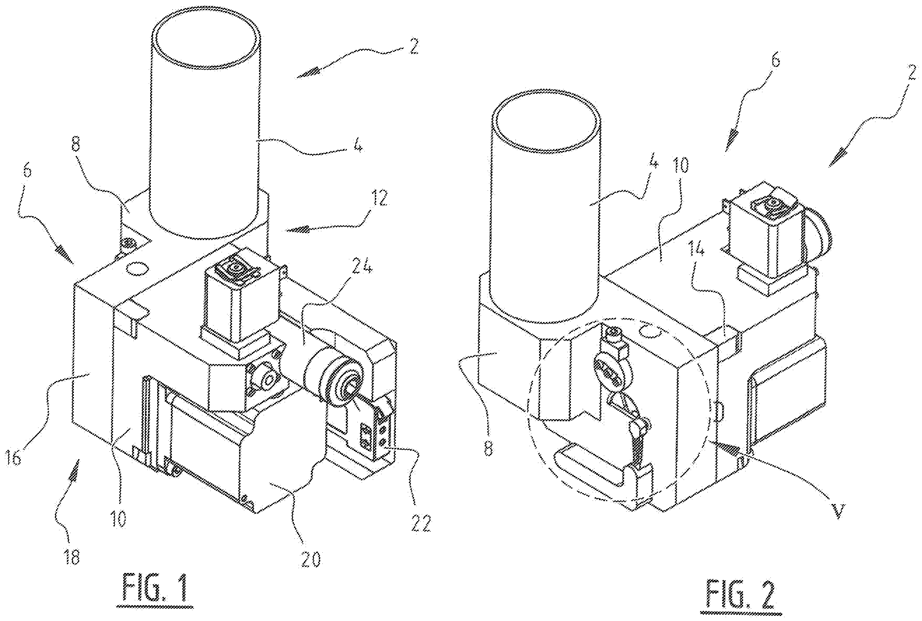

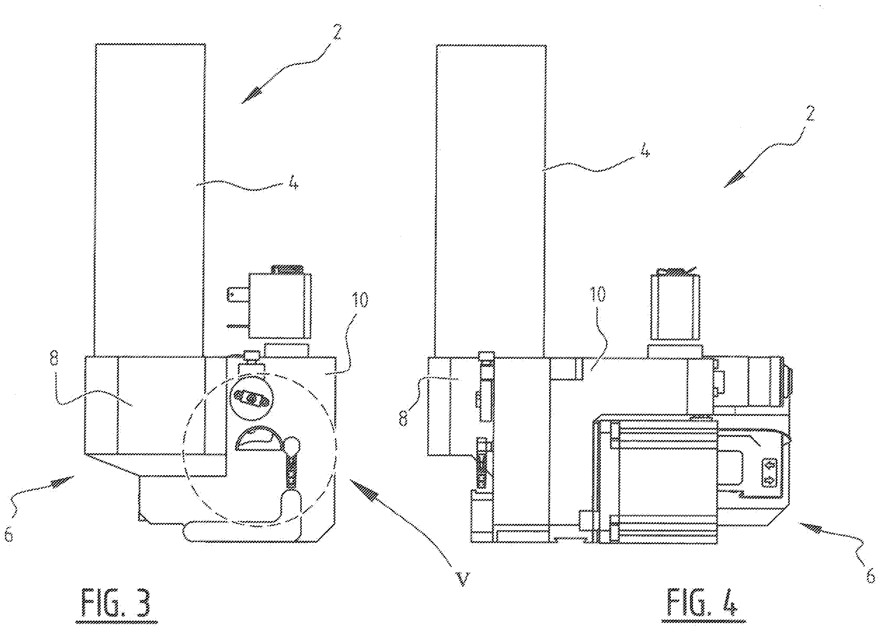

Dosing unit 2 (figures 1-4) comprises inlet 4 and housing 6. In the illustrated embodiment, housing 6 comprises first housing part 8 and second part 10 that are connected with a number of hinges 12 and closed with lock 14.

First housing part 8 comprises storage compartment 16 that is connected to inlet 4. In the illustrated embodiment, first compartment 8 is also provided with outlet 18. It will be understood that a different configuration can also be envisaged in accordance with the present invention.

Second housing part 10 is provided with the external connections, for example relating to drive 20, air block 22 providing an air inlet and an air outlet, and actuator 24. Further connections and inputs can also be provided to housing parts 8, 10.

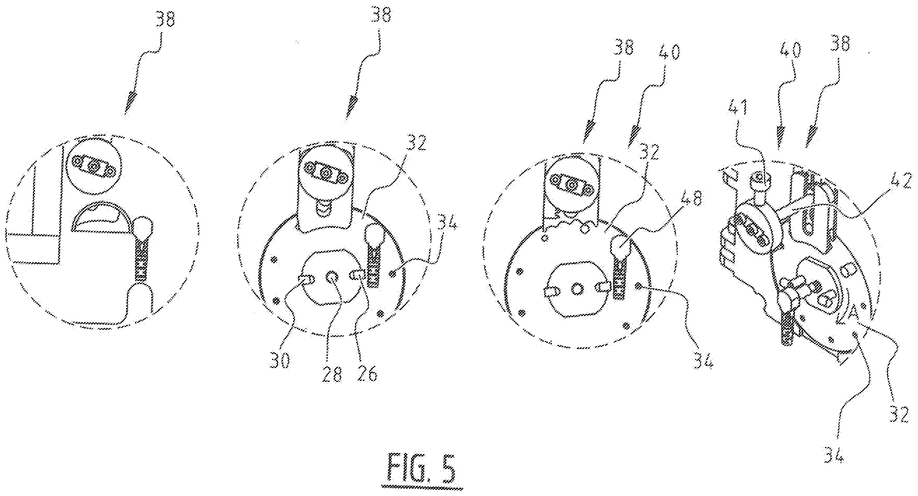

Mixer 26 (figure 5) rotates around shaft 28 with mixing pens or pins 30 to enable mixing of particles or granules in compartment 16. Rotating disc 32 having a number of openings 34 also rotates around shaft 28 in front of suction channel 36 that is provided in second housing part 10.

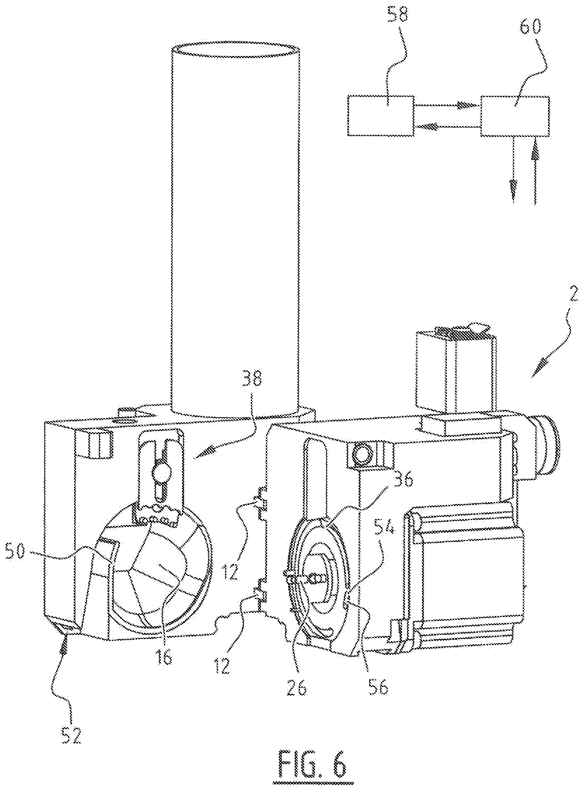

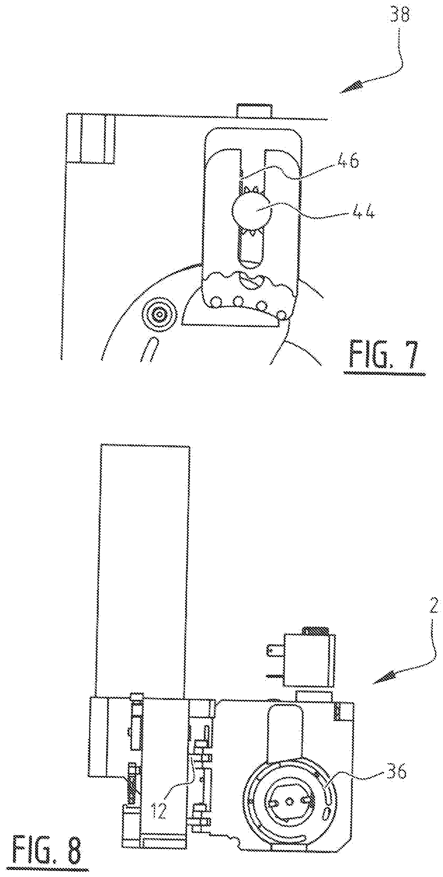

In the illustrated embodiment channel 36 (figures 6 and 8) is configured as a venturi type channel to provide an under-pressure. In the illustrated embodiment disc or rotatable transfer element 32 rotates in direction A (figure 5). Further in the illustrated embodiment channel 36 starts close to the bottom of compartment 16.

By applying an under-pressure or vacuum in channel 36 a particle or granule will position itself in front of opening 34 and will move together with opening 34 in rotating disc 32.

In the illustrated embodiment, close to the upper part of compartment 16, there is provided singulator 38 (figures 5 and 7). Singulator 38 removes double laying particles or granules in or in front of an individual opening 34 such that only one particle or granule is present in or in front of an individual opening 34 when dosing unit 2 is in use. Singulator 38 can be adjusted using adjusting element 40. In the illustrated embodiment adjustment element 41 can be actuated/activated manually or automatically. In the illustrated embodiment adjusting element 40 enables rotation of shaft 42 that is connected to gear 44. In such embodiment gear 44 cooperates with gear rack 46 to adjust singulator 38. For example, singulator 38 may adjust the effective size of openings 34 and an adjustment can be made when another sized particle or granule needs to be dosed with dosing unit 2.

Sensor 48 is provided to measure the presence of a singulated particle or granule in or in front of opening 34 in disc 32. In the illustrated embodiment sensor 48 is provided between singulator 38 and outlet channel 18 that is provided in first housing part 8 involving guide 50. Optionally, a further sensor 52 is provided in outlet 18 to determine the actual dosing of a singulated particle or granule.

In the illustrated embodiment channel 36 ends after three quarters of a rotation. To stop the under-pressure and to automatically release the singulated particle or granule, channel stop 54 is provided. Optionally, a second groove or channel 56 is provided extending over a small angle to further improve the overall efficiency of the operation of dosing unit 2.

In the illustrated embodiment controller 58 (figure 6) of the overall process provides controller 60 of dosing unit 2 with the instructions to dose a number of particles or granules to the desired blending recipe. Controller 60 sends instructions to the actuators of dosing unit 2 and may receive measurement information from one or more sensors 48, 52. When applying an under-pressure or vacuum to channel 36 in rotating disc 32, a particle or granule will be sucked to opening 34 and transferred from compartment 16 to outlet 18 thereby passing singulator 38. If necessary, controller 60 may instruct dosing unit 2 to correct the actual dosing in response to one or more of sensors 48, 52, for example. Dosing information may be forwarded to controller 58. It will be understood that other control configurations for controlling dosing unit 2 can be envisaged in accordance to the invention.

One of the possible applications of dosing unit 2 is in an extrusion process. For example, the process requires the supply of 80 kg/hr base or main material to which four particles or granules per second need to be dosed. This may relate to colouring particles or granules. This dosing can be provided with dosing unit 2.

In a further example the dosing unit 2 is used in a dye casting or injection moulding process. For example, such process has a cycle length or cycle time of about 10 seconds, an injection time of about 3 seconds for injecting 50 grams of base or main material in every injection. The blending recipe in this example requires dosing seven particles or granules in every injection. This dosing of seven particles or granules in every injection step can be performed with dosing unit 2.

It will be understood that other examples and applications can also be envisaged in accordance with the present invention. For example, such processes may relate to the manufacturing of automotive parts, medical products, wiring, toys, domestic articles, packaging material, building industry, electronics, machine parts, fibres, 3D printer filaments, dosing of recycled materials, etc. It will be understood that other applications can also be envisaged in accordance with the present invention.

The present invention is by no means limited to the above described preferred embodiments thereof. The rights sought are defined by the following claims within the scope of which many modifications can be envisaged.

## Claims

1. Dosing unit (2) for dosing singulated particles or granules to a blending recipe, the unit comprising:
- a housing (6) with an inlet (4) for the particles or granules, and a storage compartment (16) for the particles or granules;
- a suction channel (36) that is provided in the housing;
- a rotatable transfer element (32) with one or more suction openings (34) that moves relative to the suction channel and is provided between the suction channel and the storage compartment such that one particle of granule is picked up by one of the one or more openings and carried from the storage compartment to the blending recipe for dosing;
- a singulator (38) configured for singulating the particles or granules when transferred by one of the one or more openings of the transfer element;
- an outlet (18) for providing the singulated particles or granules to the blending recipe;
- a sensor (48) configured for proactively measuring the dosing of a singulated particle or granule, wherein the sensor is configured for measuring the presence of a singulated particle or granule in or in front of an opening (34) in transfer element (32), such that a measurement signal is achieved;
- a controller (58, 60) configured for receiving the measurement signal from the sensor prior to the actual dosing of the particle or granule to the blending recipe, **characterized in that** the controller (58, 60) is capable of correcting the dosing;
- wherein the sensor comprises a transmitter configured for transmitting a signal through the opening of the transfer element such that the presence of a particle or granule in or in front of the opening is detected prior to the actual dosing of the particle or granule to the blending recipe.

2. Dosing unit according to claim 1, wherein the singulator comprises an actuator (24) enabling singulating the particles or granules.

3. Dosing unit according to claim 1 or 2, wherein the sensor signal comprises a light beam signal.

4. Dosing unit according to one or more of the foregoing claims, the unit further comprising a dosing sensor (52) configured for measuring the actual dosing of the particle or granule.

5. Dosing unit according to one or more of the foregoing claims, wherein the suction channel is provided with a venturi.

6. Dosing unit according to one or more of the foregoing claims, wherein the openings are suitable for receiving particles or granules having an average size of diameter in the range of 1 to 4 mm.

7. Dosing unit according to one or more of the foregoing claims, wherein the transfer element is configured such that up to 25 particles or granules per second can be dosed to the blending recipe.

8. Method for dosing singulated particles or granules to a blending recipe, the method comprising the steps of:
- providing a dosing unit (2) according to any of the foregoing claims;
- driving the transfer element (32) and moving the one or more suction openings thereof relative to the suction channel (36) that is provided in the housing of the dosing unit;
- singulating the particles or granules in or in front of an opening (34) of the one or more openings (34) of the transfer element with a singulator (38);
- proactively measuring the presence of a singulated particle or granule in or in front of one of the openings of the transfer element with a sensor (48) and providing a measurement signal to a controller (58, 60); and
- controlling the dosing of the required amount of particles or granules according to the blending recipe with the controller (58, 60).

9. Method according to claim 8, further comprising the step of correcting the dosing in response to the measurement signal indicating the absence of a particle or granule in or in front of an opening of the transfer element during the dosing.

10. Method according to claim 8 or 9, further comprising the step of measuring the actual dosing of the particle or granule to the blending recipe.

## Patentansprüche

1. Dosiereinheit (2) zum Dosieren von vereinzelten Partikeln oder Granulaten zu einer Mischrezeptur, aufweisend:
- ein Gehäuse (6) mit einem Einlass (4) für die Partikel oder die Granulate, und einen Vorratsbehälter (16) für die Partikel oder die Granulate;
- ein in dem Gehäuse vorgesehener Ansaugkanal (36);
- ein drehbares Transferelement (32) mit einer oder mehreren Ansaugöffnungen (34) das sich relativ zu dem Ansaugkanal bewegt und zwischen dem Ansaugkanal und dem Vorratsbehälter vorgesehen ist, so dass ein Partikel oder Granulat von einer der einen oder mehreren Öffnungen aufgenommen und zur Dosierung von dem Vorratsbehälter zu der Mischrezeptur befördert wird;
- einen Vereinzeler (38), der so ausgebildet ist, dass er die Partikel oder Granulate vereinzelt, wenn sie durch eine der einen oder mehreren Öffnungen des Transferelements übertragen werden;
- einen Auslass (18), um die vereinzelten Partikel oder Granulate der Mischrezeptur zuzuführen;
- einen Sensor (48), der so ausgebildet ist, dass er proaktiv die Dosierung eines vereinzelten Partikels oder Granulats misst, wobei der Sensor so ausgebildet ist, dass er das Vorhandensein eines vereinzelten Partikels oder Granulats in oder vor einer Öffnung (34) im Transferelement (32) misst, so dass ein Messsignal erhalten wird;
- eine Steuerung (58, 60), die so konfiguriert ist, dass sie das Messsignal von dem Sensor vor der tatsächlichen Dosierung des Partikels oder Granulats zu der Mischrezeptur empfängt, **dadurch gekennzeichnet, dass**
- die Steuerung (58, 60) in der Lage ist, die Dosierung zu korrigieren;
- wobei der Sensor einen Sender aufweist, der so ausgebildet ist, dass er ein Signal durch die Öffnung des Transferelements sendet, so dass vor der tatsächlichen Dosierung des Partikels oder Granulats zu der Mischrezeptur das Vorhandensein eines Partikels oder Granulats in oder vor der Öffnung erfasst wird.

2. Dosiereinheit nach Anspruch 1, wobei der Vereinzeler einen Aktuator (24) aufweist der die Vereinzelung der Partikel oder Granulate ermöglicht.

3. Dosiereinheit nach Anspruch 1 oder 2, wobei das Sensorsignal ein Lichtstrahl-Signal umfasst.

4. Dosiereinheit nach einem oder mehreren der vorherigen Ansprüche, wobei die Einheit ferner einen Dosiersensor (52) aufweist, der zum Messen der tatsächlichen Dosierung des Partikels oder Granulats ausgebildet ist.

5. Dosiereinheit nach einem oder mehreren der vorherigen Ansprüche, wobei der Ansaugkanal mit einem Venturi versehen ist.

6. Dosiereinheit nach einem oder mehreren der vorherigen Ansprüche, wobei die Öffnungen zur Aufnahme von Partikeln oder Granulaten mit einem durchschnittlichen Durchmesser von 1 bis 4 mm geeignet sind.

7. Dosiereinheit nach einem oder mehreren der vorherigen Ansprüche, wobei das Transferelement so ausgebildet ist, dass bis zu 25 Partikel oder Granulate pro Sekunde zu der Mischrezeptur dosiert werden können.

8. Verfahren zum Dosieren von vereinzelten Teilchen oder Granulaten zu einer Mischrezeptur, wobei das Verfahren die folgenden Schritte aufweist:
- Bereitstellen einer Dosiereinheit (2) nach einem der vorherigen Ansprüche;
- Antreiben des Transferelements (32) und Bewegen der einen oder mehreren Ansaugöffnungen desselben relativ zu dem im Gehäuse der Dosiereinheit vorgesehenen Ansaugkanal (36);
- Vereinzeln der Partikel oder Granulate in oder vor einer Öffnung (34) der einen oder mehreren Öffnungen (34) des Transferelements mit einem Vereinzeler (38);
- proaktives Messen des Vorhandenseins eines vereinzelten Partikels oder Granulats in oder vor einer der Öffnungen des Transferelements mit einem Sensor (48) und Übermitteln eines Messsignals an eine Steuerung (58, 60); und
- Steuern der Dosierung der erforderlichen Menge an Partikeln oder Granulaten gemäß der Mischrezeptur mittels der Steuerung (58, 60).

9. Verfahren nach Anspruch 8, ferner aufweisend den Schritt des Korrigierens der Dosierung als Reaktion auf ein während der Dosierung das Nichtvorhandenseins eines Partikels oder Granulats in oder vor einer Öffnung des Transferelements anzeigenden Messsignals.

10. Verfahren nach Anspruch 8 oder 9, ferner aufweisend den Schritt des Messens der tatsächlichen Dosierung des Partikels oder Granulats zur Mischungsrezeptur.

## Revendications

1. Unité de dosage (2) destinée à doser des particules ou granules séparés suivant une recette de mélange, l'unité comprenant :
un logement (6) avec une entrée (4) destinée aux particules ou granules, et un compartiment de stockage (16) des particules ou granules ;
un canal d'aspiration (36) qui est agencé dans le logement ;
un élément de transfert pouvant tourner (32) avec une ou plusieurs ouvertures d'aspiration (34) qui se déplacent par rapport au canal d'aspiration et est agencé entre le canal d'aspiration et le compartiment de stockage de telle sorte qu'une particule ou granule est prélevée par l'une des une ou plusieurs ouvertures et transportée à partir du compartiment de stockage suivant la recette de mélange pour le dosage ;
un séparateur (38) configuré de manière à séparer les particules ou granules lorsqu'ils sont transférés par l'une des une ou plusieurs ouvertures de l'élément de transfert ;
une sortie (18) destinée à délivrer les particules ou granules séparés suivant la recette de mélange ;
un capteur (48) configuré afin de mesurer de manière proactive le dosage d'une particule ou granule séparé,
dans laquelle le capteur est configuré de manière à mesurer la présence d'une particule ou granule séparé sur, ou face à, une ouverture (34) sur l'élément de transfert (32), de telle sorte qu'un signal de mesure est réalisé ;
un contrôleur (58, 60) configuré de manière à recevoir le signal de mesure à partir du capteur avant le dosage réel des particules ou granules suivant la recette de mélange, **caractérisée en ce que** le contrôleur (58, 60) est capable de corriger le dosage ;
dans laquelle le capteur comprend un émetteur configuré de manière à transmettre un signal par l'ouverture de l'élément de transfert de telle sorte que la présence d'une particule ou granule sur, ou face à l'ouverture est détectée avant le dosage réel de particule ou granule suivant la recette de mélange.

2. Unité de dosage selon la revendication 1, dans laquelle le séparateur comprend un actionneur (24) permettant la séparation des particules ou granules.

3. Unité de dosage selon la revendication 1 ou 2, dans laquelle le signal de capteur comprend un signal en faisceau lumineux.

4. Unité de dosage selon une ou plusieurs des revendications précédentes, l'unité comprenant, en outre, un capteur de dosage (52) configuré de manière à mesurer le dosage réel en particule ou granule.

5. Unité de dosage selon une ou plusieurs des revendications précédentes, dans laquelle le canal d'aspiration est équipé d'un venturi.

6. Unité de dosage selon une ou plusieurs des revendications précédentes, dans laquelle les ouvertures sont adaptées afin de recevoir des particules ou granules présentant un diamètre moyen dans la plage de 1 à 4 mm.

7. Unité de dosage selon une ou plusieurs des revendications précédentes, dans laquelle l'élément de transfert est configuré de telle sorte que jusqu'à 25 particules ou granules par seconde peuvent être dosés suivant la recette de mélange.

8. Procédé de dosage de particules ou granules séparés suivant une recette de mélange, le procédé comprenant les étapes de :
fourniture d'une unité de dosage (2) selon l'une quelconque des revendications précédentes ;
entraînement de l'élément de transfert (32) et déplacement de ses une ou plusieurs ouvertures d'aspiration par rapport au canal d'aspiration (36) qui est agencé dans le logement de l'unité de dosage ;
séparation des particules ou granules sur, ou face à, une ouverture (34) des une ou plusieurs ouvertures (34) de l'élément de transfert avec un séparateur (38) ;
mesure de manière proactive de la présence d'une particule ou granule séparé sur, ou face à, l'une des ouvertures de l'élément de transfert avec un capteur (48) et fourniture d'un signal de mesure à un contrôleur (58, 60) ; et
commande du dosage de la quantité de particules ou granules requise selon la recette de mélange avec le contrôleur (58, 60).

9. Procédé selon la revendication 8, comprenant, en outre, l'étape de correction du dosage en réponse au signal de mesure indiquant l'absence de particule ou granule sur, ou face à, une ouverture de l'élément de transfert pendant le dosage.

10. Procédé selon la revendication 8 ou 9, comprenant, en outre, l'étape de mesure du dosage réel de particule ou granule suivant la recette de mélange.
